# EUROPEAN PATENT SPECIFICATION

(11) **EP 2 993 927 B1**
(45) Date of publication and mention of the grant of the patent: **07.11.2018**
(21) Application number: 14183143.8
(22) Date of filing: 02.09.2014
(51) Int. Cl.: H04L 29/12, H04L 29/06

(54) **Recognition method and system using the same**
Erkennungsverfahren und System damit
Procédé de reconnaissance ET Système utilisant celui-ci

(43) Date of publication of application: 09.03.2016
(73) Proprietor: Compal Broadband Networks Inc., 114 Taipei City (TW)
(72) Inventor: Chen, Ke-Jui, 302 Hsinchu County (TW)
(74) Representative: Straus, Alexander

(56) References cited:
- US-A1- 2013 067 065
- US-A1- 2014 112 245
- US-A1- 2014 134 947

## Description

### Field of the Invention

The invention relates to a recognition method and a recognition module, and particularly to a recognition method and a recognition module capable of rapidly and efficiently identifying a client device.

### Background of the Invention

With the continued evolution of communication technology, portable communication devices, such as personal computers, laptops, cellular phones, Personal Digital Assistants (PDAs), tablets and similar devices, access to the Internet has been widely used. At the same time, however, problems are created.

For example, a user attempting to connect to a network at a hotel must experience a tedious authentication process. Authenticating the user may be dependent on the information about the user's device. For example, if the user is running a Windows device, the user is authenticated by the hotel. If the user is using an IP telephone, the user is not authenticated. Moreover, different types of vulnerability scans may be performed according to the operating system of the device. For example, a different scan is performed for Microsoft™ and Apple™ operating systems. In other words, granting enterprise access to personal devices has direct implications on security and network control.

Moreover, identification of the device is important in enabling support for multiple devices in a single application or a website. As the type of device used to access the Internet may vary, so do the software requirements for that device, because there is little standardization of software and operating system platforms between competing manufacturers. An issue that arises is the proper and consistent identification of the device, such that the application or the website is capable of servicing the device. Different electric devices support and use different software, and in order to ensure that the proper version of the software is downloaded to the device to support the application or the website, a mechanism is needed to identify the device without user intervention.

As the number of portable communication devices rapidly grows, a user can hardly manage all the portable communication devices merely with a MAC Address list as it used to be, because MAC Address, in fact, means little to the user. Particularly, when the MAC Address or other identity information with lots of complicate symbols and numerals are listed all at one time, it could confuse the user and hinder efficient searching. In such a situation, the user may expect a way to narrow down the search with a precise indication, or even a way to clearly identify each of the portable communication devices.

Document US 2014/112245A1 provides various levels of information about an advertised service instead of identifying a device. For example, the first level information enables the wireless devices 120-1 to 120-n to determine if they are interested in the service, and the third level information allows the wireless devices 120-1 to 120-n to decide whether to consume the service advertised by wireless device 110. Both Document US 2013/067065 A1 and Document US 2014/134947 A1 relate to a method for device discovery among certain electrical devices, such as a computer and a printer. However, situation could be changed when a network access device (commonly known as a modem), an access point, a router or a gateway intends to recognize a client electrical device.

Thus, an improved method for determining information about a client device is needed. In particular, it would be useful to be able to identify information of the client device efficiently.

### Summary of the Invention

The present invention aims at providing a recognition method and a recognition module capable of rapidly and efficiently identifying a client device.

This is achieved by a recognition method and a recognition module respectively according to the independent claims 1 and 10 here below. The dependent claims pertain to corresponding further developments and improvements.

As will be seen more clearly from the detailed description following below, a claimed recognition method (20) performed by a recognition module (110) in a network (10) is disclosed herein. The recognition method (20) comprises the steps of attempting to identify at least one of a plurality of identity information of a client device (120) when the client device (120) seeks to join the network (10) in a first stage, and determining whether all of the plurality of identity information are collected, wherein the rest of the plurality of identity information are extracted in a second stage if any of the plurality of identity information has not been obtained in the first stage.

In another aspect of the invention, a claimed recognition module (110) in a network (10) is disclosed in the detailed description here below. The recognition module (110) comprises an extraction sub-module (114) and a storage sub-module (116) storing a program code (115). The program code (115) instructs the extraction sub-module (114) to execute the steps of attempting to identify at least one of a plurality of identity information of a client device (120) when the client device (120) seeks to join the network (10) in a first stage, and determining whether all of the plurality of identity information are collected, wherein the rest of the plurality of identity information are extracted in a second stage if any of the plurality of identity information has not been obtained in the first stage.

### Brief Description of the Drawings

The invention is further illustrated by way of example with reference to the accompanying drawings. Thereof,
FIG. 1 is a schematic diagram illustrating a network according to an embodiment of the present invention.
FIGs. 2 and 3 are flow charts illustrating a recognition method according to an embodiment of the present invention.

### Detailed Description

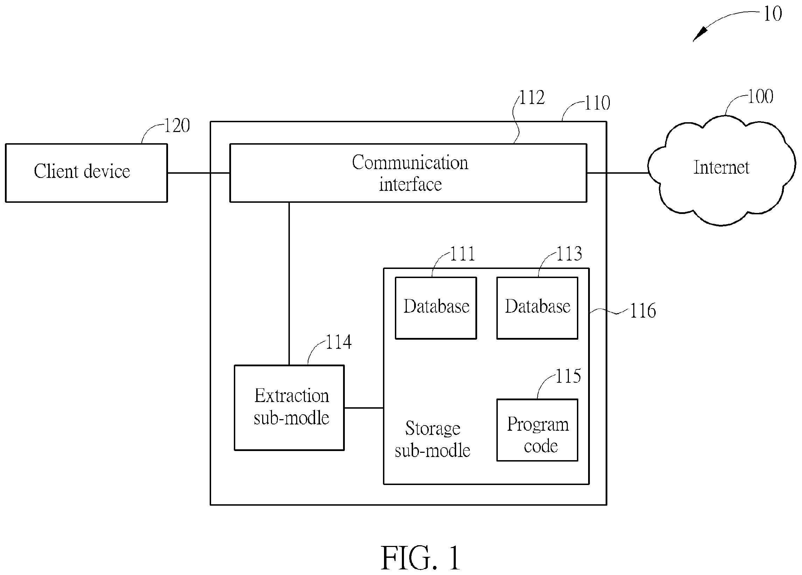

FIG. 1 is a schematic diagram illustrating a network 10 according to an embodiment of the present invention. The network 10 comprises a recognition module 110, which may be disposed in, for example, a network access device (commonly known as a modem), an access point, a router or a gateway. A client device 120 tries to join the network 10 via the recognition module 110 in order to, for example, access the Internet 100. The recognition module 110 comprises a communication interface 112, an extraction sub-module 114 and a storage sub-module 116. The extraction sub-module 114 aims to collect all of the identity information of the client device 120. Within the scope of the present invention, identity information may be subdivided into a plurality of sections/pieces . The manner in which such plurality may be subdivided can vary depending on the needs thereof and all such subdivisions are well known in the prior art to a person skilled in the art. Specifically, the identity information of the client device 120 comprises device type information, operating system information, brand information and product name information, for example. The storage sub-module 116 comprises databases 111, 113 and a program code 115. The program code 115 instructs the extraction sub-module 114 to obtain all of the identity information; the databases 111, 113 respectively are utilized to save all of the identity information of identified client devices and specifications of client devices such as screen size, recommended resolution, processor types, memory size, touch panel types and other key features.

Briefly, to optimize services for the client device 120 and to protect the network 10, the recognition module 110 identifies the client device 120 according to several identity information of the client device 120 when the client device 120 tries to join the network 10. To simplify the identification and to boost transmission efficiency, the extraction sub-module 114 of the recognition module 110 collects the identity information first according to content within a Dynamic Host Configuration Protocol options field, a media access control address (MAC address), or a hostname (sometimes also referred to as a device hostname) of the client device 120. In case some of the required identity information such as the product name information is unidentifiable, the extraction sub-module 114 then extracts the identity information from a response signal corresponding to a Bonjour request signal or a Simple Service Discovery Protocol request signal. If some of the required identity information still remains unidentified, the extraction sub-module 114 monitors the client device 120 for a while, and then instantly redirects the client device 120 to an identification web page to retrieve the rest identity information. Consequently, unnecessary efforts can be avoided to improve transmission efficiency, and all the identity information is collected.

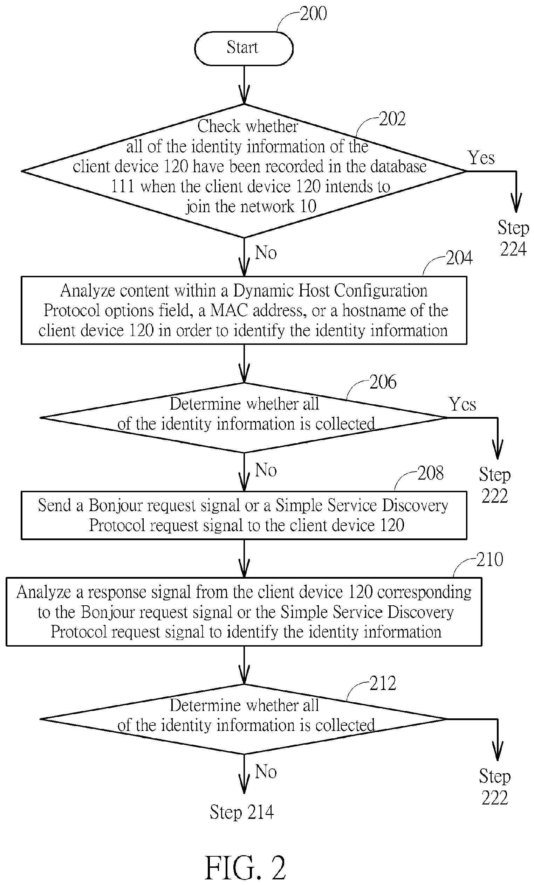

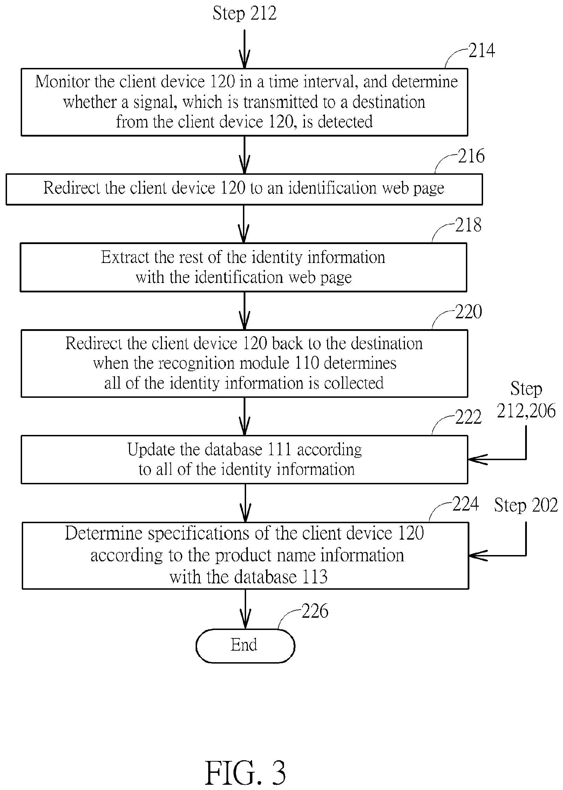

Specifically, the recognition module 110 performs a recognition method 20 to collect identity information of the client device 120, and FIGs. 2 and 3 are flow charts illustrating the recognition method 20 according to an embodiment of the present invention. In the embodiment, the recognition method 20 may be compiled as the program code 115 stored in the storage sub-module 116 to instruct the extraction sub-module 114 to perform the recognition method 20. As shown in FIG. 2, the recognition method 20 comprises the following steps:
Step 200: Start.
Step 202: Check whether all of the identity information of the client device 120 have been recorded in the database 111 when the client device 120 intends to join the network 10. If no, proceed to Step 204; otherwise, proceed to Step 224.
Step 204: Analyze content within a Dynamic Host Configuration Protocol options field, a MAC address, or a hostname of the client device 120 in order to identify the identity information.
Step 206: Determine whether all of the identity information is collected. If no, proceed to Step 208; otherwise, proceed to Step 222.
Step 208: Send a Bonjour request signal or a Simple Service Discovery Protocol request signal to the client device 120.
Step 210: Analyze a response signal from the client device 120 corresponding to the Bonjour request signal or the Simple Service Discovery Protocol request signal to identify the identity information.
Step 212: Determine whether all of the identity information is collected. If no, proceed to Step 214; otherwise, proceed to Step 222.
Step 214: Monitor the client device 120 for a time interval, and determine whether a signal, which is transmitted to a destination from the client device 120, is detected.
Step 216: Redirect the client device 120 to an identification web page.
Step 218: Extract the rest of the identity information with the identification web page.
Step 220: Redirect the client device 120 back to the destination when the recognition module 110 determines all of the identity information is collected.
Step 222: Update the database 111 according to all of the identity information.
Step 224: Determine specifications of the client device 120 according to the product name information with the database 113 .
Step 226: End.

In other words, in Step 202, when the client device 120 tries to join the network 10, the database 111 is checked to determine if the client device 120 is recorded in the database 111. If so, all of the identity information of the client device 120 should be saved in the database 111 as well. If not, then the extraction sub-module 114 begins to collect the identity information of the client device 120 in Steps 204, 208, 210 and 214-218, which can be divided into a first stage and a second stage. Steps 204, 208 and 210 belong to the first stage, which can find some of the identity information fast and has few effects on the transmission efficiency; steps 214-218 belong to the second stage, which slightly affect transmission rate but can determine all the identity information definitely.

In order to identify the identity information, in Step 204, content within a Dynamic Host Configuration Protocol options field, a MAC address, or a hostname of the client device 120 is analyzed. The identity information such as the brand information may involve analysis of the MAC address of the client device 120. Ordinarily, the extraction sub-module 114 can extract the MAC address from signaling originating from the client device 120. A MAC address is a unique identifier assigned for communications, and this 48-bit address is most often assigned by a manufacturer (i.e., the manufacturer of the client device 120) . Every device that is able to connect to an IEEE 802 network (such as Ethernet and WiFi) has a MAC address, and by the same token the extraction sub-module 114 can find the brand information of the client device 120 with its MAC address. Although intended to be a permanent and globally unique identification, it is possible to change the MAC address by means of the so-called MAC spoofing, which inhibit the extraction sub-module 114 to determine the brand information.

Similarly, the identity information such as the operating system information and device type information may involve analysis of the hostname of the client device 120. Because the hostname of the client device 120 would be provided to the Dynamic Host Configuration Protocol (DHCP) and Domain Name Service (DNS) servers, the hostname can be easily captured by the extraction sub-module 114. If the client device 120 is an android device, its default hostname from DNS server would show "android-" with a (permanent) android identity (ID) of 128-bits. In such a situation, the extraction sub-module 114 can determine the operating system information (i.e., ANDROID) and device type information (i.e., a mobile phone) of the client device 120. Unfortunately, the hostname is also changeable and thus this approach may not work all the times.

Moreover, the operating system information can also be determined using the DHCP protocol. For example, the client device 120 broadcasts a DHCP message in efforts to obtain an Internet Protocol (IP) address for use on the network 10. Usually, the contents within the DHCP Options field of the DHCP message can suggest the operating system information, or even the brand information and the product name information, which may assist the extraction sub-module 114 in determining the identity information. In the case of Microsoft Windows XP, MSFT 5.0 (i.e. , a so-called Vendor Code) is sent for DHCP Option 60 after the term "vendor class identifier"; consequently, by collecting and examining this information, the extraction sub-module 114 can differentiate between various operating systems to find the operating system information (e.g., Windows) associate with the client device 120. However, this approach may fail since the exact contents are optionally provided, and the Vendor Code in DHCP Option 60 can be changed from the default value of "MSFT 5.0" or "MSFT 98" to a custom string.

In Step 206, if the extraction sub-module 114 is unable to recognize the client device 120 as the identity information is not identifiable, the extraction sub-module 114 sends a Bonjour request signal or a Simple Service Discovery Protocol (SSDP) request signal to the client device 120 according to Step 208.

In Step 208, Bonjour operations can facilitate the recognition of the identity information such as the device type information, the operating system information, the brand information and the product name information. Bonjour is Apple's implementation of Zero-configuration networking, meaning that users can set up a local area network without any configuration, and provides a way to discover services on the local area network. In the Discovery operation of Bonjour, the extraction sub-module 114 multicasts a Bonjour request signal with Query device-info Service defined or other Service Types defined. The client device 120 may then issue a response signal corresponding to the Bonjour request signal. A Bonjour TXT record returned in the response signal may comprise "TXT model=MacBookPro3" that indicates the device type information (i.e., a laptop), the operating system information (i.e., Mac), the brand information (i.e., Apple) and the product name information (i.e., MacBookPro3) . Accordingly, the extraction sub-module 114 can determine almost all the desired identity information after analyzing the Bonjour TXT record in the response signal according to Step 210. Nevertheless, Bonjour is normally built-in with Apple s OS X and iOS operating systems, while legacy Apple devices rarely support Bonjour. Also, devices running other operating systems such as Microsoft Windows usually fail to accommodate Bonjour.

Meanwhile, the operating system information can be determined using the SSDP. The SSDP is a network protocol for advertisement and discovery of network services and presence information with Universal Plug and Play (uPnP), and works with NOTIFY and M-SEARCH methods. When a device (such as the extraction sub-module 114) wishes to discover UPnP devices (such as the client device 120) on the network 10, a SSDP request signal (technically named as an M-SEARCH message) is multicast from the extraction sub-module 114 to the client device 120. Then, the client device 120 may unicast a response signal to reply to the M-search message. For a Microsoft Windows device, strings such as "Microsoft-Windows-NT/5.1 UPnP/1.0 UPnP-Device-Host/1.0" may be provided in the response signal. Therefore, by analyzing the response signal in Step 210, the identity information such as the operating system information can be identified.

In Step 212, the extraction sub-module 114 determines whether all of the identity information is collected. If not, the extraction sub-module 114 eavesdrops on the client device 120 for a predetermined period of time in Step 214. Because the recognition module 110 may receive service requests from the client device 120 when the client device 120 intends to access the Internet 100 via the recognition module 110, the extraction sub-module 114 monitors the client device 120 to quickly capture one service request from the client device 120 and save the service request temporarily. For example, an ANDROID device would transmit a service request to GOOGLE. It is worth noting that eavesdropping on network traffic significantly wastes resources. Therefore, the extraction sub-module 114 merely monitors the client device 120 for a predetermined time interval, and then redirects the client device 120 to an identification web page according to Step 216. This predetermined time interval is short such as 5 minutes, but may be properly adjusted according to other system requirements or operation experiences.

After the client device 120 is redirected to the identification web page in Step 216, the extraction sub-module 114 tries to gather the rest of the identity information with the identification web page according to Step 218. For example, the identification web page is dedicated encoded to require the client device 120 to send the unknown identity information, especially the product name information. The mechanism may be similar to captive portal techniques, except that the identification web page does not ask any user to key in any information but requests the identity information directly from the client device 120. In some embodiments, however, the identification web page may contain an entry field for a user to enter the required identity information of the client device 120 or a pushdown list box for a user to select the right identity information. On the other hand, since many operating systems have Application Programming Interfaces (APIs) which may be queried remotely using an API, it can facilitate the identification with the identification web page. If necessary, software may be downloaded to the client device 120 from the identification web page to recognize the client device 120. Alternatively, if the kept service request sent from the client device 120 in Step 214 using Hypertext Transport Protocol (HTTP), the kept service request would include a User-Agent header, which may include the identity information such as the device type information, the operating system information and the brand information to infer the client device 120. Otherwise, a response is required to send to the identification web page from the client device 120 in an HTML form, such that a User-Agent header in the response can be utilized to define the client device 120.

Note that it never takes long during the redirecting process in Step 218, and the redirecting process avoids burdening the recognition module 110. Consequently, the transmission rate is improved. Furthermore, all the identity information would be determined in Step 218.

In Step 220, when the recognition module 110 determines all of the identity information is collected, the client device 120 is redirected back to its original destination. In the meanwhile, the extraction sub-module 114 updates the database 111 according to the gathered identity information in Step 222. In this way, when another client device tries to join the network 10, the extraction sub-module 114 can simply check the database 111 to find all the identity information, thereby increasing efficiency.

In Step 224, the extraction sub-module 114 determines specifications of the client device 120 according to the product name information with the database 113. As set forth above, the product name information is one of the identity information, which can be discover mainly through Bonjour operations in Step 210 and the identification web page in Step 218. And the product name information can provide specifications of the client device 120 about its capabilities of the display, memory and processor, after looking up the database 113 with the product name information of the client device 120. Alternatively, the extraction sub-module 114 may directly search on the Internet 100 for the specifications of the client device 120. Moreover, the database 113 may not be configured in the storage sub-module 116 of the recognition module 110, but is disposed in another electronic device.

Specifically, the extraction sub-module 114 may include a processor such as a discrete logic circuit (s) having logic gates for implementing logic functions upon data signals, an application specific integrated circuit (ASIC) having appropriate combinational logic gates, a programmable gate array(s) (PGA), a field programmable gate array (FPGA), a microprocessor, a digital signal processor (DSP), etc. The storage sub-module 116 that stores databases 111, 113 ideally has updatable memory format, such as flash memory or a hard disc drive; however, the storage sub-module 116 can be a random access memory (RAM) 124, a read-only memory 126. The program code 115 may be written in any suitable computer language. The identification web page can be written as a JavaScript HTML page, java program, java applet, or other languages. The terms "signal", "message", "request" and "response" should be understood to comprise data formatting that is appropriate for the transfer of information involved in a particular operation, such as messages, communication protocol information, or other associated information.

In summary, to simplify the identification and to boost transmission efficiency, the recognition module in the present invention collects the identity information by means of two stages - the first stage and the second stage. In the first stage, a portion of the identity information can be quickly found without effects on the transmission efficiency; in the second stage, the transmission rate is slightly affected but all the identity information can be definitely determined. Consequently, unnecessary efforts can be avoided to improve transmission efficiency, and all the identity information is collected.

## Claims

1. A recognition method (20) performed by a recognition module (110), comprising the steps of:
the recognition module (110) attempting, in a first stage, to identify at least one of a plurality of identity information of a client device (120) when the client device (120) seeks to join a network (10) via the recognition module (110);
the recognition module (110) extracting the rest of the plurality of identity information in a second stage when any of the plurality of identity information has not been obtained in the first stage, wherein the step of extracting the rest of the plurality of identity information in the second stage comprises redirecting the client device (120) to an identification web page to retrieve the rest of the plurality of identity information when the recognition module (110) detects a signal directed to a destination from the client device (120); and
the recognition module (110) determining specifications of the client device (120) according to one of the plurality of identity information with a second database (113) or through the Internet (100).

2. The recognition method (20) of claim 1, wherein the recognition method (20) further comprises determining whether all of the plurality of identity information are collected after the first stage.

3. The recognition method (20) of any of claims 1-2, wherein the plurality of identity information comprises device type information, operating system information, brand information and product name information.

4. The recognition method (20) of any of claims 1-3, wherein the recognition method (20) further comprises the step of:
checking whether all of the plurality of identity information have been recorded in a first database (111) before the recognition module (110) attempts to identify at least one of the plurality of identity information of the client device (120) in the first stage.

5. The recognition method (20) of any of claims 1-4, wherein the step of attempting to identify at least one of the plurality of identity information of the client device (120) in the first stage comprises the step of :
identifying at least one of the plurality of identity information according to a content within a Dynamic Host Configuration Protocol options field, a media access control address, or a hostname of the client device (120) .

6. The recognition method (20) of any of claims 1-5, wherein the step of attempting to identify at least one of the plurality of identity information of the client device (120) in the first stage comprises the step of :
identifying at least one of the plurality of identity information according to a response signal corresponding to a Bonjour request signal or a Simple Service Discovery Protocol request signal.

7. The recognition method (20) of any of claims 1-6, wherein the step of extracting the rest of the plurality of identity information in the second stage further comprises the steps of:
monitoring the client device (120) for a time interval before redirecting the client device (120) to the identification web page;
and
redirecting the client device (120) back to the destination when the recognition module (110) determines all of the plurality of identity information is collected after redirecting the client device (120) to the identification web page.

8. The recognition method (20) of any of claims 4-7, wherein the recognition method (20) further comprises the step of:
updating the first database (111) according to all of the plurality of identity information after the recognition module (110) obtains all of the identity information.

9. The recognition method (20) of any of claims 3-8, wherein the recognition method (20) determines specifications of the client device (120) according to the product name information with [[a]] the second database (113) or through the Internet (100).

10. A recognition module (110), comprising:
an extraction sub-module (114); and
a storage sub-module (116), storing a program code (115), that when run on a computer, instructs the extraction sub-module (114) to execute the steps of the recognition method according to any of claims 1-9.

## Patentansprüche

1. Erkennungsverfahren (20), durchgeführt von einem Erkennungsmodul (110), umfassend die Schritte:
das Erkennungsmodul (110) versucht in einem ersten Schritt wenigstens eine aus mehreren Identitätsinformationen von einem Benutzergerät (120) zu identifizieren, wenn das Benutzergerät (120) versucht, einem Netzwerk (10) über das Erkennungsmodul (110) beizutreten;
das Erkennungsmodul (110) gewinnt die verbliebenen der mehreren Identitätsinformationen in einem zweiten Schritt, wenn eine der mehreren Identitätsinformationen in dem ersten Schritt nicht erhalten wurde, wobei der Schritt des Gewinnens der verbliebenen der mehreren Identitätsinformationen in dem zweiten Schritt ein Umleiten des Benutzergeräts (120) an eine Identifizierungswebseite umfasst, um die verbliebenen der mehreren Identitätsinformationen abzurufen, wenn das Erkennungsmodul (110) ein Signal erfasst, das von dem Benutzergerät (120) an eine Zieladresse gerichtet ist; und
das Erkennungsmodul (110) bestimmt Spezifizierungen des Benutzergeräts (120) gemäß einer der mehreren Identitätsinformationen mit einer zweiten Datenbank (113) oder durch das Internet (100).

2. Erkennungsverfahren (20) nach Anspruch 1, wobei das Erkennungsverfahren (20) ferner ein Bestimmen umfasst, ob alle der mehreren Identitätsinformationen nach dem ersten Schritt gesammelt wurden.

3. Erkennungsverfahren (20) nach einem der Ansprüche 1-2, wobei die mehreren Identitätsinformationen eine Gerätetypinformation, Betriebssysteminformation, Markeninformation und Produktnameninformation umfassen.

4. Erkennungsverfahren (20) nach einem der Ansprüche 1-3, wobei das Erkennungsverfahren (20) ferner den Schritt umfasst:
Prüfen, ob alle der mehreren Identitätsinformationen in einer ersten Datenbank (111) gespeichert wurden, bevor das Erkennungsmodul (110) versucht, wenigstens eine aus den mehreren Identitätsinformationen von dem Benutzergerät (120) in dem ersten Schritt zu gewinnen.

5. Erkennungsverfahren (20) nach einem der Ansprüche 1-4, wobei der Schritt des Versuchens wenigstens eine der mehreren Identitätsinformationen von dem Benutzergerät (120) in dem ersten Schritt zu identifizieren den Schritt umfasst:
Identifizieren wenigstens eine der mehreren Identitätsinformationen gemäß einem Inhalt innerhalb eines Dynamic Host Configuration Protocol-Optionsfelds, einer Media Access Control Adresse oder eines Hostnamens des Benutzergeräts (120).

6. Erkennungsverfahren (20) nach einem der Ansprüche 1-5, wobei der Schritt des Versuchens wenigstens eine der mehreren Identitätsinformationen von dem Benutzergerät (120) in dem ersten Schritt zu identifizieren den Schritt umfasst:
Identifizieren wenigstens eine der mehreren Identitätsinformationen gemäß eines Antwortsignals, das zu einem Bonjour-Anfragesignal oder einem Simple Service Discovery Protocol Anfragesignal gehört.

7. Erkennungsverfahren (20) nach einem der Ansprüche 1-6, wobei der Schritt des Gewinnens der verbliebenen der mehreren Identitätsinformationen in dem zweiten Schritt ferner den Schritt umfasst:
Beobachten des Benutzergeräts (120) für einen Zeitraum bevor das Benutzergerät (120) an die Identifizierungswebseite umgeleitet wird; und
Umleiten des Benutzergeräts (120) zurück zur Zieladresse, wenn das Erkennungsmodul (110) bestimmt, dass alle der mehreren Identitätsinformationen nach dem Umleiten des Benutzergeräts (120) an die Identifizierungswebseite gesammelt wurden.

8. Erkennungsverfahren (20) nach einem der Ansprüche 4-7, wobei das Erkennungsverfahren (20) ferner den Schritt umfasst:
Aktualisieren der ersten Datenbank (111) gemäß allen der mehreren Identitätsinformationen, nachdem das Erkennungsmodul (110) alle der Identitätsinformationen erhalten hat.

9. Erkennungsverfahren (20) nach einem der Ansprüche 3-8, wobei das Erkennungsverfahren (20) Spezifikationen des Benutzergeräts (120) gemäß der Produktnameninformation mit der zweiten Datenbank (113) oder durch das Internet (100) bestimmt.

10. Erkennungsmodul (110) umfassend:
Ein Extraktionsuntermodul (114), und
Ein Speicheruntermodul (116), das einen Programmcode (115) speichert, der, wenn er auf einem Computer läuft, das Extraktionsuntermodul (114) anweist, die Schritte des Erkennungsverfahrens nach einem der Ansprüche 1-9 auszuführen.

## Revendications

1. Procédé de reconnaissance (20) exécuté par un module de reconnaissance (110), comprenant les étapes suivantes :
le module de reconnaissance (110) essaie, dans une première phase, d'identifier au moins l'une d'une pluralité d'informations d'identité d'un dispositif client (120) lorsque le dispositif client (120) cherche à rejoindre un réseau (10) par l'intermédiaire du module de reconnaissance (110) ;
le module de reconnaissance (110) extrait le reste de la pluralité d'informations d'identité dans une seconde phase lorsque l'une quelconque de la pluralité d'informations d'identité n'a pas été obtenue dans la première phase, l'étape d'extraction du reste de la pluralité d'informations d'identité dans la seconde phase consistant à rediriger le dispositif client (120) vers une page web d'identification pour récupérer le reste de la pluralité d'informations d'identité lorsque le module de reconnaissance (110) détecte un signal dirigé vers une destination provenant du dispositif client (120) ; et
le module de reconnaissance (110) détermine des spécifications du dispositif client (120) en fonction de l'une de la pluralité d'informations d'identité avec une seconde base de données (113) ou par Internet (100).

2. Procédé de reconnaissance (20) selon la revendication 1, le procédé de reconnaissance (20) consistant en outre à déterminer si la totalité de la pluralité d'informations d'identité est collectée après la première phase.

3. Procédé de reconnaissance (20) selon l'une quelconque des revendications 1 et 2, dans lequel la pluralité d'informations d'identité comprend des informations de type de dispositif, des informations de système d'exploitation, des informations de marque et des informations de nom de produit.

4. Procédé de reconnaissance (20) selon l'une quelconque des revendications 1 à 3, le procédé de reconnaissance (20) comprenant en outre l'étape consistant à :
vérifier si la totalité de la pluralité d'informations d'identité a été enregistrée dans une première base de données (111) avant que le module de reconnaissance (110) essaie d'identifier au moins l'une de la pluralité d'informations d'identité du dispositif client (120) dans la première phase.

5. Procédé de reconnaissance (20) selon l'une quelconque des revendications 1 à 4, dans lequel l'étape consistant à essayer d'identifier au moins l'une de la pluralité d'informations d'identité du dispositif client (120) dans la première phase comprend l'étape consistant à :
identifier au moins l'une de la pluralité d'informations d'identité en fonction d'un contenu compris dans un champ d'options de protocole de configuration d'hôte dynamique, une adresse de commande d'accès au support ou un nom d'hôte du dispositif client (120).

6. Procédé de reconnaissance (20) selon l'une quelconque des revendications 1 à 5, dans lequel l'étape consistant à essayer d'identifier au moins l'une de la pluralité d'informations d'identité du dispositif client (120) dans la première phase comprend l'étape consistant à :
identifier au moins l'une de la pluralité d'informations d'identité en fonction d'un signal de réponse correspondant à un signal de requête Bonjour ou à un signal de requête de protocole de découverte de services simple.

7. Procédé de reconnaissance (20) selon l'une quelconque des revendications 1 à 6, dans lequel l'étape consistant à extraire le reste de la pluralité d'informations d'identité dans une seconde phase comprend les étapes consistant à :
surveiller le dispositif client (120) pendant un intervalle de temps avant de rediriger le dispositif client (120) vers la page web d'identification ; et
rediriger le dispositif client (120) en retour vers la destination lorsque le module de reconnaissance (110) détermine que la totalité de la pluralité d'informations d'identité est collectée après avoir redirigé le dispositif client (120) vers la page web d'identification,

8. Procédé de reconnaissance (20) selon l'une quelconque des revendications 4 à 7, le procédé de reconnaissance (20) comprenant en outre l'étape consistant à :
mettre à jour la première base de données (111) en fonction de la totalité de la pluralité d'informations d'identification après que le module de reconnaissance (110) a obtenu la totalité des informations d'identité.

9. Procédé de reconnaissance (20) selon l'une quelconque des revendications 3 à 8, le procédé de reconnaissance (20) déterminant des spécifications du dispositif client (120) en fonction des informations de nom de produit avec la seconde base de données (113) ou par Internet (100).

10. Module de reconnaissance (110), comprenant :
un sous-module d'extraction (114) ; et
un sous-module de stockage (116), stockant un code de programme (115) qui, lorsqu'il est exécuté sur un ordinateur, ordonne au sous-module d'extraction (114) d'exécuter les étapes du procédé de reconnaissance défini selon l'une quelconque des revendications 1 à 9.
